# EUROPEAN PATENT APPLICATION

(11) **EP 3 313 040 A1**
(43) Date of publication of application: **25.04.2018**
(21) Application number: 16810747.2
(22) Date of filing: 23.02.2016
(51) Int. Cl.: H04L 29/06

(54) **IKE NEGOTIATION CONTROL METHOD, APPARATUS AND SYSTEM**

(30) Priority: 17.06.2015 CN 201510336644
(71) Applicant: ZTE Corporation, Shenzhen, Guangdong 518057 (CN)
(72) Inventor: SUN, Shikang, Shenzhen Guangdong 518057 (CN); TANG, Xiaokun, Shenzhen Guangdong 518057 (CN); GUO, Ruifang, Shenzhen Guangdong 518057 (CN); CHEN, Liying, Shenzhen Guangdong 518057 (CN); HUANG, Sen, Shenzhen Guangdong 518057 (CN); ZANG, Liang, Shenzhen Guangdong 518057 (CN)
(74) Representative: Novagraaf Technologies
(86) International application number: PCT/CN2016/074366
(87) International publication number: WO 2016/202006

(57) **Abstract**

An Internet Key Exchange (IKE) negotiation control method, device and system are provided. In the method, a receiving end receives an IKE negotiation message sent by an initiating end, and parses the IKE negotiation message to obtain IKE negotiation message information; in a case that a current IKE negotiation is in an aggressive mode, the receiving end acquires triple information of message and initiating end identity information according to the IKE negotiation message information, and searches for and acquires a virtual negotiation interface, matched with the initiating end, on the receiving end according to the triple information of message and the initiating end identity information. An IKE negotiation control device and system are also provided. The solution implements accurate and correct matching of a virtual negotiation interface in an IKE negotiation process, avoids negotiation failure caused by selecting a wrong virtual negotiation interface, and saves computing resources and storage space of two end devices performing IKE negotiation.

## Description

The present application claims benefit of Chinese patent application No. 201510336644.2, filed with the Chinese State Intellectual Property Office (SIPO) on June 17, 2015, the contents of which are hereby incorporated by reference in its entirety.

### Technical Field

The invention relates to the technical field of communication security, in particular to an Internet Key Exchange (IKE) negotiation control method, device and system.

### Background

Security of information transmission has been an important problem of Internet data transmission with development of Internet technologies. Internet Protocol Security (IPSec) protocol is a current popular data encryption protocol as well as a long-term development direction.

When a user carries out communications in which transmission data is protected through the IPSec protocol, strategies and strategy parameters of each IP security channel may be recorded through a Security Association (SA). The SA, as a basis of IPSec, is an agreement established by both communication parties, and decides a protocol, a transcoding way, a key and key validity for data packet protection. Generally, the SA may be established and maintained through an IKE protocol.

The IKE protocol mainly includes negotiations of two phases. The negotiation of the first phase aims to establish an IKE SA for both communication parties, and is used for protecting the negotiation of the second phase. The negotiation of the first phase may be performed in a main mode or an aggressive mode. The negotiation of the second phase aims to establish an IPSec SA, and is used for providing an encrypted authentication protection for real data. Generally, an IPSec virtual negotiation interface may be configured on a device, and IKE SA negotiation parameters and IPSec SA negotiation parameters for negotiation may be configured under the virtual negotiation interface. Two communication parties may negotiate according to the configured parameters. If the two communication parties can reach consensus through negotiation, the IKE SA and the IPSec SA may be generated in turn; or else, the negotiation fails.

In practical applications, during IKE negotiation, after receiving a negotiation message from an initiating end, a receiving end may search for a corresponding virtual negotiation interface according to related information including, e.g., a message destination IP address and a message Virtual Private Network-ID (VPN-ID). However, there may be a situation where multiple users may connect to the receiving end at the same time, consequently there may be multiple virtual negotiation interfaces, which have the same message destination IP address and message VPN-ID but different entity configuration parameters, on a receiving end. In such a situation, because the virtual negotiation interface cannot be accurately matched, if the virtual negotiation interface is selected randomly, the negotiation may fail, and computing resources and storage space of the two devices performing negotiation may be wasted.

### Summary

Some embodiments of the invention provide an IKE negotiation control method, device and system, which may solve a problem of negotiation failure caused by inaccuracy of matching a virtual negotiation interface in an IKE negotiation process.

An embodiment of the invention provides an IKE negotiation control method, which may include the following acts.

A receiving end may receive an IKE negotiation message sent by an initiating end.

The receiving end may parse the IKE negotiation message to obtain IKE negotiation message information.

In a case that a current IKE negotiation is in an aggressive mode, the receiving end may acquire triple information of message and initiating end identity information according to the IKE negotiation message information.

The receiving end may search for and acquire a virtual negotiation interface, matched with the initiating end, on the receiving end according to the triple information of message and the initiating end identity information.

In an exemplary embodiment, after the IKE negotiation message information is obtained, the method may further include the following acts.

Whether a current IKE negotiation is in an aggressive mode may be judged according to the IKE negotiation message information.

In a case that the current IKE negotiation is not in the aggressive mode, negotiation may be performed according to the current IKE negotiation mode.

In an exemplary embodiment, the act that the triple information of message and the initiating end identity information is acquired may be implemented in the following manner.

A message source IP address, a message destination IP address, a message VPN-ID of the IKE negotiation message and the initiating end identity information may be acquired according to the IKE negotiation message information.

The message source IP address, the message destination IP address and the message VPN-ID may be combined to obtain the triple information of message.

In an exemplary embodiment, the act that the virtual negotiation interface, matched with the initiating end, on the receiving end is searched and acquired may be implemented in a following manner.

One or more virtual negotiation interfaces matching the triple information of message may be searched in a virtual negotiation interface table of the receiving end according to the triple information of message.

In a case that one or more virtual negotiation interfaces matching the triple information of message are found in the virtual negotiation interface table, matching screening may be performed on the one or more found virtual negotiation interfaces according to the initiating end identity information. In a case that the matching screening is successfully performed, a virtual negotiation interface on which the matching screening is successfully performed may be acquired as the virtual negotiation interface, matched with the initiating end, on the receiving end. In a case that no virtual negotiation interface matching the triple information of message is found in the virtual negotiation interface table, one or more virtual negotiation interfaces matching the message destination IP address and the message VPN-ID may be searched in the virtual negotiation interface table according to the message destination IP address and the message VPN-ID in the triple information of message.

In a case that one or more virtual negotiation interfaces matching the message destination IP address and the message VPN-ID are found in the virtual negotiation interface table, matching screening may be performed on the one or more found virtual negotiation interfaces according to the initiating end identity information. In a case that the matching screening is successfully performed, a virtual negotiation interface on which the matching screening is successfully performed may be acquired as the virtual negotiation interface, matched with the initiating end, on the receiving end.

In an exemplary embodiment, after the virtual negotiation interface, matched with the initiating end, on the receiving end is searched and acquired, the method may further include the following acts.

In a case that the virtual negotiation interface, matched with the initiating end, on the receiving end is acquired successfully, configuration parameters of the virtual negotiation interface may be acquired. According to the configuration parameters of the virtual negotiation interface, IKE negotiation may be performed with the initiating end, and an IKE SA may be generated.

In a case that the virtual negotiation interface, matched with the initiating end, on the receiving end is not acquired successfully, the IKE negotiation may be terminated.

Another embodiment of the invention provides an IKE negotiation control device, which may include a receiving module, a parsing module, an acquiring module and a searching module.

The receiving module may be configured to receive the IKE negotiation message sent by the initiating end.

The parsing module may be configured to parse the IKE negotiation message to obtain the IKE negotiation message information.

The acquiring module may be configured to, in a case that a current IKE negotiation is in an aggressive mode, acquire the triple information of message and the initiating end identity information according to the IKE negotiation message information.

The searching module may be configured to search for and acquire the virtual negotiation interface, matched with the initiating end, on the receiving end according to the triple information of message and the initiating end identity information.

In an exemplary embodiment, the IKE negotiation control device may further include a judging module and a negotiating module.

The judging module may be configured to judge whether the current IKE negotiation is in the aggressive mode according to the IKE negotiation message information.

The negotiating module may be configured to, in a case that the current IKE negotiation is not in the aggressive mode, perform negotiation according to the current IKE negotiation mode.

In an exemplary embodiment, the acquiring module may be further configured to acquire, according to the IKE negotiation message information, the message source IP address, the message destination IP address, the message VPN-ID of the IKE negotiation message and the initiating end identity information, and combine the message source IP address, the message destination IP address and the message VPN-ID to obtain the triple information of message.

In an exemplary embodiment, the searching module may be further configured to:
search in the virtual negotiation interface table of the receiving end for one or more virtual negotiation interfaces matching the triple information of message according to the triple information of message;
in a case that one or more virtual negotiation interfaces matching the triple information of message are found in the virtual negotiation interface table, perform matching screening on the one or more found virtual negotiation interfaces according to the initiating end identity information; in a case that the matching screening is successfully performed, acquire a virtual negotiation interface on which the matching screening is successfully performed as the virtual negotiation interface, matched with the initiating end, on the receiving end; in a case that no virtual negotiation interface matching the triple information of message is found in the virtual negotiation interface table, search in the virtual negotiation interface table for one or more virtual negotiation interfaces matching the message destination IP address and the message VPN-ID according to the message destination IP address and the message VPN-ID in the triple information of message;
in a case that one or more virtual negotiation interfaces matching the message destination IP address and the message VPN-ID are found in the virtual negotiation interface table, perform matching screening on the one or more found virtual negotiation interfaces according to the initiating end identity information; in a case that the matching screening is successfully performed, acquire a virtual negotiation interface on which the matching screening is successfully performed as the virtual negotiation interface, matched with the initiating end, on the receiving end.

In an exemplary embodiment, the negotiating module may be further configured to, in a case that the searching module acquires the virtual negotiation interface, matched with the initiating end, on the receiving end successfully, acquire configuration parameters of the virtual negotiation interface; according to the configuration parameters of the virtual negotiation interface, perform the IKE negotiation with the initiating end, and generate the IKE SA.

The negotiating module may be further configured to, in a case that the searching module fails to acquire the virtual negotiation interface, matched with the initiating end, on the receiving end successfully, terminate the IKE negotiation.

Still another embodiment of the invention provides an IKE negotiation control system, which may include a receiving end and an initiating end.

The receiving end may include the receiving module, the parsing module, the acquiring module, the searching module, the judging module and the negotiating module.

The initiating end may be configured to send the negotiation message, perform the IKE negotiation with the receiving end, and generate the IKE SA.

Still another embodiment of the invention provides an IKE negotiation control device, which may include a processor and storage for storing instructions that the processor can execute.

The processor may be configured to:
receive an IKE negotiation message sent by an initiating end;
parse the IKE negotiation message to obtain IKE negotiation message information;
in a case that a current IKE negotiation is in an aggressive mode, acquire triple information of message and initiating end identity information according to the IKE negotiation message information;
search for and acquire the virtual negotiation interface, matched with the initiating end, on the receiving end according to the triple information of message and the initiating end identity information.

Still another embodiment of the invention provides a nonvolatile computer-readable storage medium, in which instructions may be stored. When being executed by the processor of the receiving end of the IKE negotiation control, the instructions may make the receiving end implement the IKE negotiation control method of any above-mentioned embodiment.

According to the IKE negotiation control method, device and system provided by some embodiments of the invention, a virtual negotiation interface, matched with an initiating end, on a receiving end may be searched and acquired based on triple information of a control message and initiating end identity information, so that the virtual negotiation interface may be a correct virtual negotiation interface in the IKE negotiation process. By virtue of the solution, accurate matching of the virtual negotiation interface may be implemented, thereby avoiding negotiation failure caused by selecting a wrong virtual negotiation interface, and saving computing resources and storage space of two end devices performing IKE negotiation.

### Brief Description of the Drawings

Fig. 1 is a flowchart of a first embodiment of an IKE negotiation control method according to the invention;
Fig. 2 is a flowchart of a second embodiment of the IKE negotiation control method according to the invention;
Fig. 3 is a flowchart of a third embodiment of the IKE negotiation control method according to the invention;
Fig. 4 is a flowchart of a fourth embodiment of the IKE negotiation control method according to the invention;
Fig. 5 is a schematic diagram of functional modules in a first embodiment of an IKE negotiation control device according to the invention;
Fig. 6 is a schematic diagram of functional modules in a second embodiment of the IKE negotiation control device according to the invention; and
Fig. 7 is a structure diagram of a first embodiment of an IKE negotiation control system according to the invention.

For making the solution of the invention clearer, detailed elaboration is given below in combination with the accompanying drawings.

### Detailed Description of the Embodiments

It should be understood that the specific embodiments described are only used for illustrating the invention and not intended to limit the invention.

A main solution of some embodiments of the invention is described as follows. A receiving end may receive an IKE negotiation message sent by an initiating end, and may parse the IKE negotiation message to obtain IKE negotiation message information. In a case that a current IKE negotiation is in an aggressive mode, the receiving end may acquire triple information of message and initiating end identity information according to the IKE negotiation message information, and may search for and acquire a virtual negotiation interface, matched with the initiating end, on the receiving end according to the triple information of message and the initiating end identity information. In this solution, the virtual negotiation interface, matched with the initiating end, on the receiving end is the correct virtual negotiation interface.

In a related technology, when multiple virtual negotiation interfaces are found on the receiving end, it may be impossible to accurately acquire the correct virtual negotiation interface. Therefore, if any virtual negotiation interface is selected randomly to perform IKE negotiation with the initiating end, it may be impossible to determine whether the selected virtual negotiation interface is the correct virtual negotiation interface matched with the initiating end, and the IKE negotiation may fail.

An embodiment of the invention provides a solution, which may accurately match the virtual negotiation interface and provide a correct virtual negotiation interface for the IKE negotiation.

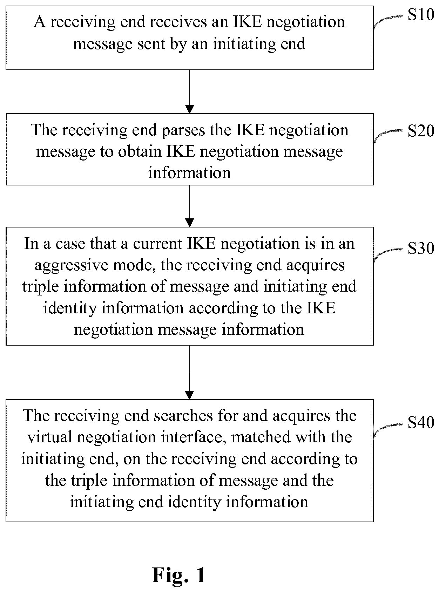

Specifically, with reference to Fig. 1, the first embodiment of the IKE negotiation control method according to the invention provides an IKE negotiation control method. The IKE negotiation control method may include the following acts S10 to S40.

At act S10, a receiving end may receive an IKE negotiation message sent by an initiating end.

In the embodiment of the invention, when it is needed to perform data transmission between a client and a server in a local area network, or from a router to a router and from a gateway to a gateway in a peer-to-peer network or a wide area network, or when it is needed to perform data transmission in a remote access, the IPSec protocol may be used for ensuring communication security. As the basis of ensuring security and secrecy during data transmission under the IPSec protocol, both communication parties need to establish an SA through the IKE negotiation. For performing the IKE negotiation, the initiating end may initiate an IKE negotiation request, encapsulate the current IKE negotiation data into the IKE negotiation message, and send the IKE negotiation message to the receiving end. The receiving end may receive the IKE negotiation message sent by the initiating end. The IKE negotiation message may include a protocol header ID and negotiation message entity information of the current IKE negotiation.

At act S20, the receiving end may parse the IKE negotiation message to obtain IKE negotiation message information.

After receiving the IKE negotiation message sent by the initiating end, the receiving end may parse the protocol header and entity of the IKE negotiation message to obtain the IKE negotiation message information. The IKE negotiation message information may include the protocol header ID and the entity information. The protocol header ID may include mode information of the current IKE negotiation.

At act S30, in a case that a current IKE negotiation is in an aggressive mode, the receiving end may acquire triple information of message and initiating end identity information according to the IKE negotiation message information.

If the current IKE negotiation is in the aggressive mode, the entity information in the IKE negotiation message information may include a negotiation strategy (quintuple information, including a hash type, an encryption algorithm, an authentication method, a Diffie Hellman (DH) group and SA validity of IKE), a DH shared value, a random value nonce, the initiating end identity information, and a message source IP address, a message destination IP address and a message VPN-ID of the IKE negotiation message.

The message source IP address, the message destination IP address, the message VPN-ID of the IKE negotiation message and the initiating end identity information may be acquired according to the IKE negotiation message information. The message source IP address, the message destination IP address and the message VPN-ID may be combined to obtain the triple information of message. The triple information of message and the initiating end identity information may be used for searching for and acquiring the virtual negotiation interface, matched with the initiating end, on the receiving end.

At act S40, the receiving end may search for and acquire the virtual negotiation interface, matched with the initiating end, on the receiving end according to the triple information of message and the initiating end identity information.

The receiving end may search, in a virtual negotiation interface table on the receiving end according to the triple information of message, one or more virtual negotiation interfaces matched with the initiating end, and perform matching screening on the one or more found virtual negotiation interfaces according to the initiating end identity information. After the matching screening is performed successfully, the receiving end may acquire the virtual negotiation interface as the virtual negotiation interface, matched with the initiating end, on the receiving end. A virtual negotiation interface on which the matching screening is successfully performed may be used as the correct virtual negotiation interface of the IKE negotiation.

In the present embodiment, after performing matching screening on the virtual negotiation interface of the receiving end based on the triple information of the control message and the initiating end identity information, and acquiring the virtual negotiation interface, matched with the initiating end, on the receiving end, the virtual negotiation interface can be guaranteed to be a correct virtual negotiation interface. By virtue of the solution, the receiving end is enabled to precisely match a virtual negotiation interface. In an IKE negotiation process, the situation of negotiation failure caused by selecting a wrong virtual negotiation interface because the correct virtual negotiation interface cannot be learned when there are multiple virtual negotiation interfaces may be avoided. Therefore, the computing resources and storage space of two end devices performing the IKE negotiation may be saved.

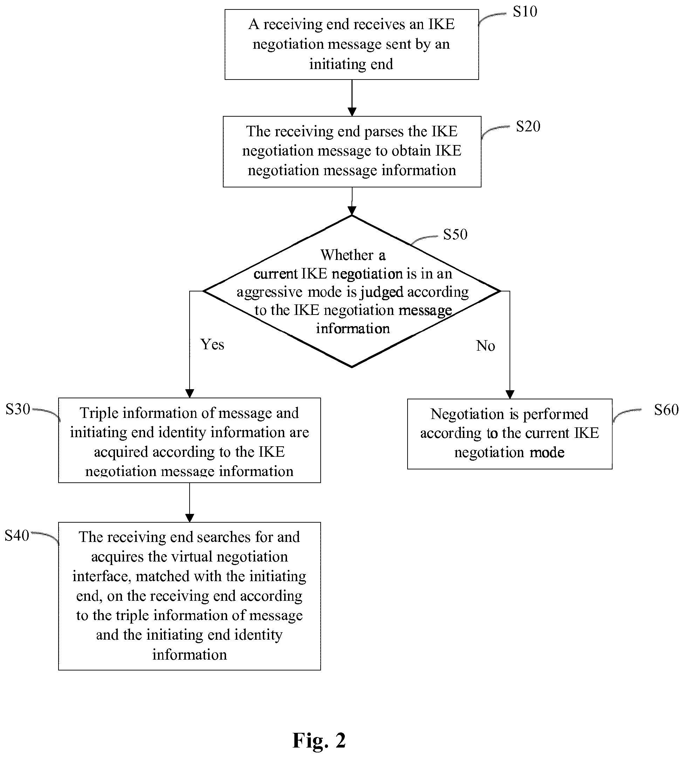

Furthermore, with reference to Fig. 2, the second embodiment of the IKE negotiation control method according to the invention provides an IKE negotiation control method. Based on the embodiment shown in Fig. 1, after act S20, the method may further include the following acts S50 and S60.

At act S50, whether the current IKE negotiation is in the aggressive mode may be judged according to the IKE negotiation message information.

Negotiation modes of an IKE SA established through the IKE negotiation may include a main mode and an aggressive mode. The IKE negotiation message information may include a protocol header ID and entity information. The protocol header ID may include mode information of the current IKE negotiation. The receiving end may acquire the mode information of the current IKE negotiation according to the protocol header ID, and judge whether the current IKE negotiation is in the aggressive mode.

At act S60, in a case that the current IKE negotiation is not in the aggressive mode, negotiation may be performed according to the current IKE negotiation mode.

If the receiving end judges that the current IKE negotiation is not in the aggressive mode according to the protocol header ID, the IKE negotiation message information may not include the initiating end identity information. In order to avoid a situation where the virtual negotiation interface cannot be acquired accurately, the receiving end may perform the IKE negotiation according to the current negotiation mode.

In the present embodiment, the IKE negotiation mode may be judged according to the IKE negotiation message information. In the aggressive mode, the IKE negotiation message information may include the triple information of message and the initiating end identity information, and the receiving end may search, based on triple information of a control message and initiating end identity information, the virtual negotiation interface matched with the initiating end to accurately match to screen out the virtual negotiation interface matched with the initiating end. In a non-aggressive mode, the IKE negotiation message information may not include the initiating end identity information, and the receiving end and the initiating end may perform the IKE negotiation through the current negotiation mode.

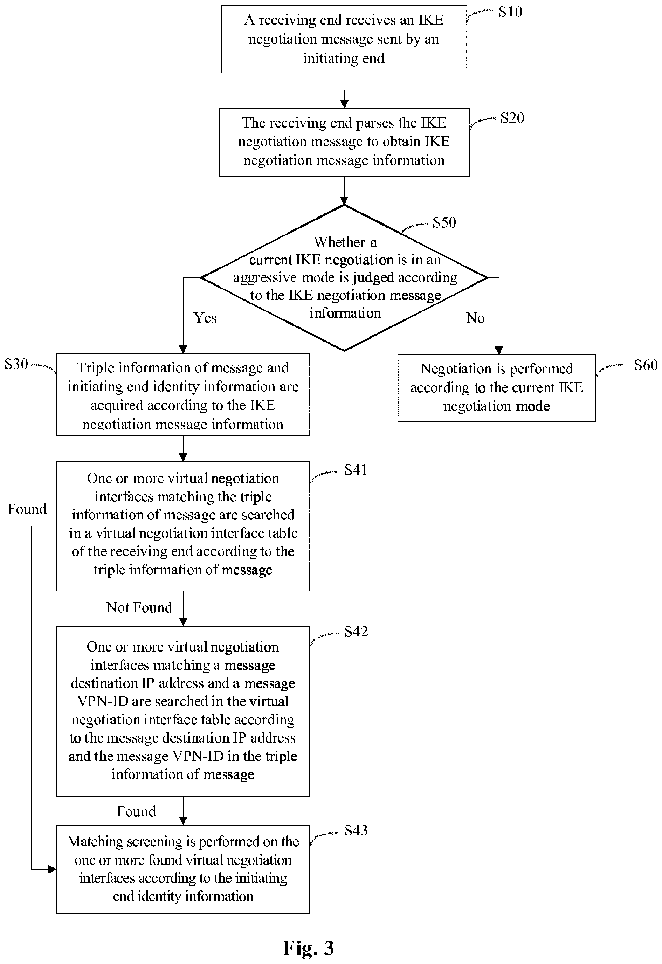

Furthermore, with reference to Fig. 3, the third embodiment of the IKE negotiation control method according to the invention provides an IKE negotiation control method. Based on any embodiment shown in Fig. 1 and Fig. 2 (taking Fig. 2 for example in the present embodiment), S40 may include the following acts S41 to S43.

At act S41, one or more virtual negotiation interfaces matching the triple information of message may be searched in the virtual negotiation interface table of the receiving end according to the triple information of message.

According to the triple information of message, whether there are virtual negotiation interfaces with the same configuration parameters and triple information of message may be searched in the virtual negotiation interface table of the receiving end. The virtual negotiation interface table may include all the configuration parameters of all the virtual negotiation interfaces on the receiving end, including the negotiation strategy, the DH shared value, the random value nonce, the virtual negotiation interface identity information and a proof load.

In a case that one or more virtual negotiation interfaces matching the triple information of message are found in the virtual negotiation interface table, act S43 may be executed. In a case that no virtual negotiation interface matching the triple information of message is found in the virtual negotiation interface table, act S42 may be executed.

At act S42, according to the message destination IP address and the message VPN-ID in the triple information of message, one or more virtual negotiation interfaces matching the message destination IP address and the message VPN-ID may be searched in the virtual negotiation interface table. In a case that one or more virtual negotiation interfaces matching the message destination IP address and the message VPN-ID are found in the virtual negotiation interface table, act S43 may be executed.

In a case that no virtual negotiation interface with the same configuration parameters as the message destination IP address and the message VPN-ID is found in the virtual negotiation interface table, matching is not successful, and the receiving end does not successfully acquire the virtual negotiation interface, matched with the initiating end, on the receiving end.

At act S43, matching screening may be performed on the one or more found virtual negotiation interfaces according to the initiating end identity information. In a case that the matching screening is successfully performed, a virtual negotiation interface on which the matching screening is successfully performed may be acquired as the virtual negotiation interface, matched with the initiating end, on the receiving end.

In a case that one or more virtual negotiation interfaces with the same configuration parameters as the triple information of message are successfully found in the virtual negotiation interface table, or one or more virtual negotiation interfaces matching the message destination IP address and the message VPN-ID are found in the virtual negotiation interface table, matching may be performed on the one or more found virtual negotiation interfaces according to the initiating end identity information to screen out the virtual negotiation interface whose configuration parameters include the initiating end identity information. In a case that the matching screening is successfully performed, a virtual negotiation interface on which the matching screening is successfully performed may be acquired as the virtual negotiation interface, matched with the initiating end, on the receiving end. If the matching screening is not performed successfully, the receiving end fails to acquire the virtual negotiation interface, matched with the initiating end, on the receiving end.

In the present embodiment, one or more matched virtual negotiation interface may be screened according to the triple information of message preferentially, which can avoid a lot of searching work in earlier stage, and can effectively remove the unmatched virtual negotiation interface preliminarily. Then, matching screening may further be performed on the one or more found virtual negotiation interfaces matching the triple information of message according to the message identity information. The process of matching screening, with a low work burden, may directly acquire the correct virtual negotiation interface of the receiving end and exclude the wrong virtual negotiation interface.

If the matched virtual negotiation interface is not found according to the triple information of message, in view of a situation where the initiating end accesses the receiving end remotely and therefore the IP of the initiating end is unfixed, the message source IP address may be removed from the screening conditions, and the screening may be performed again in the virtual negotiation interface table according to the message destination IP address and the message VPN-ID to obtain one or more matched virtual negotiation interface, so as to avoid missing of interfaces. Then, matching screening may be further performed on the one or more found virtual negotiation interfaces matching the message destination IP address and the message VPN-ID according to the message identity information. The process of such screening, with a low work burden, may directly acquire the correct virtual negotiation interface of the receiving end and exclude the wrong virtual negotiation interface.

If no virtual negotiation interface is successfully screened out by matching according to the message identity information, there may be no virtual negotiation interface matching the initiating end identity information on the receiving end.

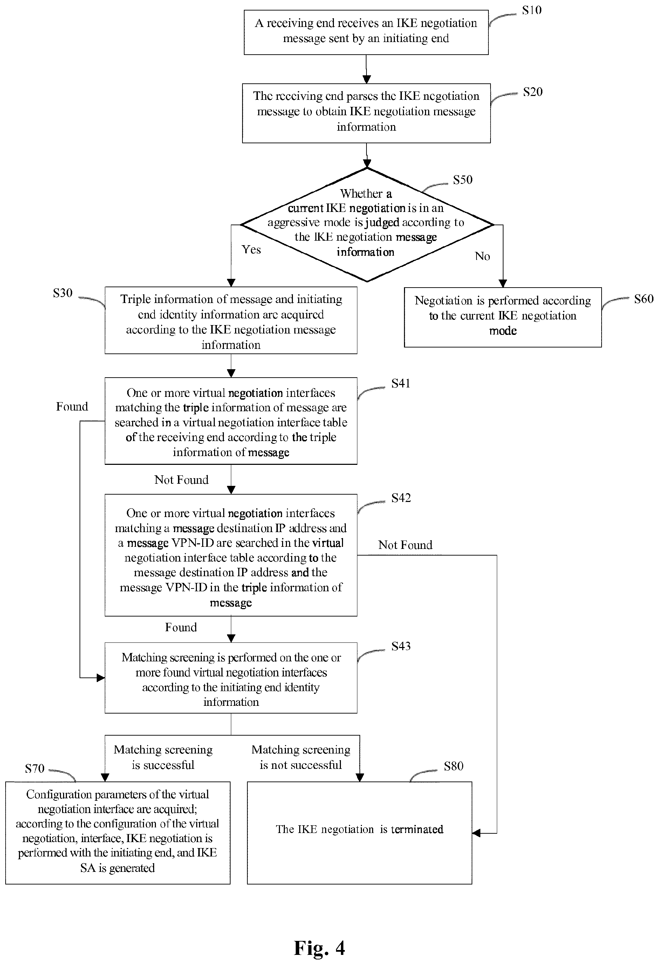

Furthermore, with reference to Fig. 4, the fourth embodiment of the IKE negotiation control method according to the invention provides an IKE negotiation control method. Based on any embodiment shown in Fig. 1, Fig. 2 and Fig. 3 (taking Fig. 3 for example in the present embodiment), the method may further include the following acts S70 and S80 after S40.

At act S70, in a case that the virtual negotiation interface, matched with the initiating end, on the receiving end is acquired successfully, configuration parameters of the virtual negotiation interface may be acquired. According to the configuration parameters of the virtual negotiation interface, the IKE negotiation may be performed with the initiating end, and the IKE SA may be generated.

The receiving end may acquire the virtual negotiation interface, matched with the initiating end, on the receiving end successfully, so that the virtual negotiation interface may be a correct virtual negotiation interface, and the matching of the virtual negotiation interface is accurate. The receiving end may use the correct virtual negotiation interface to perform the IKE negotiation with the initiating end, and generate the IKE SA successfully.

At act S80, in a case that the virtual negotiation interface, matched with the initiating end, on the receiving end is not acquired successfully, the IKE negotiation may be terminated.

If the receiving end fails to acquire the virtual negotiation interface, matched with the initiating end, on the receiving end successfully, and the receiving end does not match the initiating end, it may be impossible to perform the IKE negotiation successfully. At this point, if performing the IKE negotiation is continued, the selected virtual negotiation interface is wrong, which may result in IKE negotiation failure, wasting resources and storage space of two end devices. Terminating the IKE negotiation may avoid the negotiation failure.

In the present embodiment, after the receiving end acquires the correct virtual negotiation interface, the success rate of the IKE negotiation performed with the initiating end can be higher than the IKE negotiation of randomly selecting the virtual negotiation interface. When the receiving end fails to acquire the virtual negotiation interface matched with the initiating end successfully, the receiving end may terminate the IEK negotiation, thereby avoiding the negotiation failure, and saving the computing resources and storage space of the two end devices performing the IKE negotiation.

Still another embodiment of the invention provides an IKE negotiation control device.

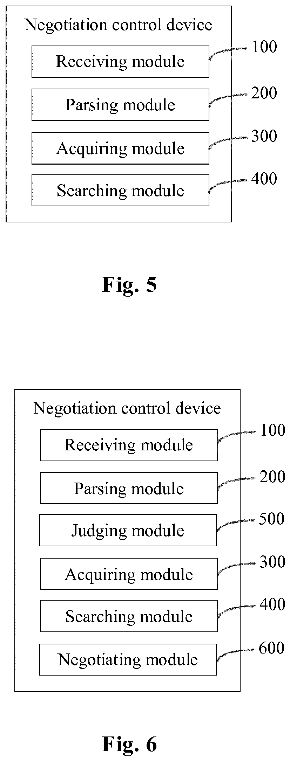

With reference to Fig. 5, the first embodiment of the IKE negotiation control device according to the invention provides an IKE negotiation control device, which may include a receiving module 100.

The receiving module 100 may be configured to receive the IKE negotiation message sent by the initiating end.

In the present embodiment, when it is needed to perform data transmission between a client and a server in a local area network, or from a router to a router and from a gateway to a gateway in a peer-to-peer network or a wide area network, or when it is needed to perform data transmission in a remote access, the IPSec protocol may be used for ensuring communication security. As the basis of ensuring security and secrecy during data transmission under the IPSec protocol, both communication parties need to establish the SA through the IKE negotiation. For performing the IKE negotiation, the initiating end may initiate an IKE negotiation request, encapsulate the current IKE negotiation data into the IKE negotiation message, and send the IKE negotiation message to the receiving end. The receiving module 100 may receive the IKE negotiation message sent by the initiating end. The IKE negotiation message may include the protocol header ID and the negotiation message entity information of the current IKE negotiation.

The IKE negotiation control device may include a parsing module 200. The parsing module 200 may be configured to parse the IKE negotiation message to obtain IKE negotiation message information.

After the receiving module 100 receives the IKE negotiation message sent by the initiating end, the parsing module 200 may parse the protocol header and entity of the IKE negotiation message to obtain the IKE negotiation message information. The IKE negotiation message information may include the protocol header ID and the entity information. The protocol header ID may include the mode information of the current IKE negotiation.

The IKE negotiation control device may include an acquiring module 300. The acquiring module 300 may be configured to, in a case that a current IKE negotiation is in an aggressive mode, acquire the triple information of message and the initiating end identity information according to the IKE negotiation message information.

If the current IKE negotiation is in the aggressive mode, the IKE negotiation message information may include the negotiation strategy, the DH shared value, the random value nonce, the initiating end identity information, the message source IP address, the message destination IP address and the message VPN-ID of the IKE negotiation message. The acquiring module 300 may be configured to acquire, according to the IKE negotiation message information, the message source IP address, the message destination IP address, the message VPN-ID of the IKE negotiation message and the initiating end identity information, and combine the message source IP address, the message destination IP address and the message VPN-ID to obtain the triple information of message.

The IKE negotiation control device may include a searching module 400. The searching module 400 may be configured to search for and acquire the virtual negotiation interface, matched with the initiating end, on the receiving end according to the triple information of message and the initiating end identity information.

The searching module 400 may be configured to search, in the virtual negotiation interface table on the receiving end according to the triple information of message, for one or more virtual negotiation interfaces matched with the initiating end, and perform matching screening on the one or more found virtual negotiation interfaces according to the initiating end identity information. After the matching screening is performed successfully, the searching module 400 may be configured to acquire the virtual negotiation interface as the virtual negotiation interface, matched with the initiating end, on the receiving end. Herein, a virtual negotiation interface on which the matching screening is successfully performed may be the correct virtual negotiation interface of the IKE negotiation.

In the present embodiment, after the searching module 400 performs matching screening on the virtual negotiation interface based on the triple information of the control message and the initiating end identity information, and acquires the virtual negotiation interface, matched with the initiating end, on the receiving end, the virtual negotiation interface can be guaranteed to be a correct virtual negotiation interface. By virtue of the solution, the receiving end is enabled to precisely match a virtual negotiation interface. In an IKE negotiation process, the situation of negotiation failure caused by selecting a wrong virtual negotiation interface because the correct virtual negotiation interface cannot be learned when there are multiple virtual negotiation interfaces may be avoided. Therefore, the computing resources and storage space of two end devices performing the IKE negotiation may be saved.

Furthermore, with reference to Fig. 6, the second embodiment of the IKE negotiation control device according to the invention provides an IKE negotiation control device. Based on the embodiment shown in Fig. 5, the IKE negotiation control device may further include a judging module 500.

The judging module 500 may be configured to judge whether the current IKE negotiation is in the aggressive mode according to the IKE negotiation message information.

The judging module 500 may be configured to acquire the mode information of the current IKE negotiation according to the mode information of the current IKE negotiation carried by the protocol header ID, and judge whether the current IKE negotiation is in the aggressive mode.

The IKE negotiation control device may further include a negotiating module 600. The negotiating module 600 may be configured to, in a case that the current IKE negotiation is not in the aggressive mode, perform negotiation according to the current IKE negotiation mode.

In a case that the current IKE negotiation is not in the aggressive mode, the IKE negotiation message information does not include the initiating end identity information; in order to accurately acquire the correct virtual negotiation interface, the negotiating module 600 may be configured to perform the IKE negotiation according to the current IKE negotiation mode.

In the present embodiment, the judging module 500 may be configured to judge the IKE negotiation mode according to the IKE negotiation message information. In the aggressive mode, the IKE negotiation message information may include the triple information of message and the initiating end identity information. The receiving end may search, based on triple information of a control message and initiating end identity information, the virtual negotiation interface matched with the initiating end to accurately match the correct virtual negotiation interface. In a non-aggressive mode, the IKE negotiation message information may not include the initiating end identity information. The negotiating module 600 may perform the IKE negotiation through the current negotiation mode.

The third embodiment of the IKE negotiation control device according to the invention provides an IKE negotiation control device. Based on any embodiment shown in Fig. 5 and Fig. 6, the searching module 400 may be further configured to search, in the virtual negotiation interface table of the receiving end according to the triple information of message, for one or more virtual negotiation interfaces matching the triple information of message.

According to the triple information of message, whether there are virtual negotiation interfaces with the same configuration parameters and triple information of message may be searched by the searching module 400 in the virtual negotiation interface table. The virtual negotiation interface table may include all the configuration parameters of all the virtual negotiation interfaces on the receiving end, including the negotiation strategy, the DH shared value, the random value nonce, the virtual negotiation interface identity information and the proof load.

In a case that no virtual negotiation interface matching the triple information of message is found in the virtual negotiation interface table, according to the message destination IP address and the message VPN-ID in the triple information of message, one or more virtual negotiation interfaces matching the message destination IP address and the message VPN-ID may be searched in the virtual negotiation interface table. In a case that no virtual negotiation interface with the same configuration parameters as the message destination IP address and the message VPN-ID is found in the virtual negotiation interface table, matching is not successful, and the receiving end does not successfully acquire the virtual negotiation interface, matched with the initiating end, on the receiving end.

In a case that one or more virtual negotiation interfaces with the same configuration parameters as the triple information of message or the virtual negotiation interface with the same configuration parameters as the message destination IP address and the message VPN-ID are found, matching screening may be performed on the one or more found virtual negotiation interfaces according to the initiating end identity information. In a case that the matching screening is successfully performed, a virtual negotiation interface on which the matching screening is successfully performed may be acquired as the virtual negotiation interface, matched with the initiating end, on the receiving end. In a case that the matching screening is not performed successfully, the receiving end fails to acquire the virtual negotiation interface, matched with the initiating end, on the receiving end successfully.

In the present embodiment, first one or more matched virtual negotiation interfaces may be screened according to the triple information of message, which may effectively remove the unmatched virtual negotiation interface preliminarily. Then, matching screening may further be performed on the one or more found virtual negotiation interfaces matching the triple information of message according to the message identity information. The process of matching screening, with a low work burden, may directly acquire the correct virtual negotiation interface of the receiving end and exclude the wrong virtual negotiation interface

If the matched virtual negotiation interface is not found according to the triple information of message, in view of the situation where the initiating end accesses the receiving end remotely and therefore the IP of the initiating end is unfixed, the message source IP address may be removed from the screening conditions, and the screening may be performed again in the virtual negotiation interface table according to the message destination IP address and the message VPN-ID to obtain one or more matched virtual negotiation interfaces, so as to avoid missing of interfaces. Then, matching screening may be further performed on the one or more found virtual negotiation interfaces matching the message destination IP address and the message VPN-ID according to the message identity information. The process of such screening, with a low work burden, may directly acquire the correct virtual negotiation interface of the receiving end and exclude the wrong virtual negotiation interface.

If no virtual negotiation interface is successfully screened out by matching according to the message identity information, there may be no virtual negotiation interface matching the initiating end identity information on the receiving end.

The fourth embodiment of the IKE negotiation control device according to the invention provides an IKE negotiation control device. Based on the embodiment shown in Fig. 6, the negotiating module 600 may be further configured to, in a case that the searching module 400 acquires the virtual negotiation interface, matched with the initiating end, on the receiving end successfully, acquire the configuration parameters of the virtual negotiation interface, and according to the configuration parameters of the virtual negotiation interface, perform the IKE negotiation with the initiating end and generate the IKE SA.

In a case that the searching module 400 acquires the virtual negotiation interface, matched with the initiating end, on the receiving end successfully, the virtual negotiation interface is the correct virtual negotiation interface, and the virtual negotiation interface is matched accurately. The negotiating module 600 may acquire the configuration parameters of the virtual negotiation interface, use the virtual negotiation interface to perform the IKE negotiation with the initiating end, and generate the IKE SA successfully.

In a case that the searching module 400 fails to acquire the virtual negotiation interface, matched with the initiating end, on the receiving end successfully, the IKE negotiation may be terminated.

In a case that the searching module 400 fails to acquire the virtual negotiation interface, matched with the initiating end, on the receiving end successfully, the receiving end may not match the initiating end, and it may be impossible to perform the IKE negotiation successfully. At this point, if performing the IKE negotiation is continued, the selected virtual negotiation interface is wrong, which may result in IKE negotiation failure, wasting resources and storage space of two end devices. Terminating the IKE negotiation may avoid the negotiation failure.

In the present embodiment, after the searching module 400 acquires the correct virtual negotiation interface, the success rate of the IKE negotiation performed by the negotiating module 600 with the initiating end can be higher than the IKE negotiation of randomly selecting the virtual negotiation interface. When the searching module 400 fails to acquire the virtual negotiation interface matched with the initiating end successfully, the negotiating module 600 may terminate the IEK negotiation, thereby avoiding the negotiation failure, and saving the computing resources and storage space of the two end devices performing the IKE negotiation.

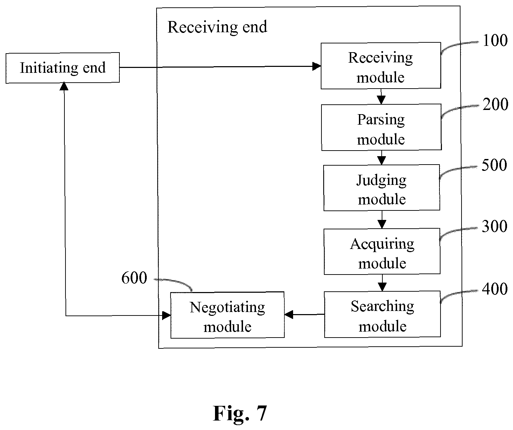

With reference to Fig. 7, the first embodiment of the IKE negotiation control system according to the invention provides an IKE negotiation control system. The IKE negotiation control system may include a receiving end and an initiating end.

The receiving end may include the receiving module 100, the parsing module 200, the acquiring module 300, the searching module 400, the judging module 500 and the negotiating module 600.

The initiating end may be configured to send the negotiation message, perform the IKE negotiation with the receiving end, and generate the IKE SA.

The initiating end may initiate an IKE negotiation request. At this point, the initiating end may send the IKE negotiation message to the receiving end. After receiving the IKE negotiation message, the receiving end may parse the IKE negotiation message to obtain the IKE negotiation message information, and judge according to the IKE negotiation message information whether the current IKE negotiation is in the aggressive mode. When the current IKE negotiation is in the aggressive mode, the receiving end may acquire the triple information and the initiating end identity information in the IKE negotiation message information, and may search for and acquire the virtual negotiation interface, matched with the initiating end, on the receiving end. The acquired virtual negotiation interface is the correct virtual negotiation interface, and the matching of the virtual negotiation interface is accurate. The receiving end may acquire the configuration parameters of the correct virtual negotiation interface, perform the IKE negotiation with the initiating end, and generate the IKE SA.

According to the IKE negotiation control method, device and system provided by some embodiments of the invention, the virtual negotiation interface, matched with the initiating end, on the receiving end is searched and acquired based on triple information of a control message and initiating end identity information, so that the virtual negotiation interface may be a correct virtual negotiation interface in the IKE negotiation process. By virtue of the solution, accurate matching of the virtual negotiation interface may be implemented, thereby avoiding negotiation failure caused by selecting a wrong virtual negotiation interface, and saving computing resources and storage space of two end devices performing IKE negotiation.

Note that, in this application, the term "include" or "comprise" or any other variant is intended to cover nonexclusive including, so that a process, a method, and an object or a device including a series of elements include not only these elements, but other elements not listed clearly, or include elements inherent in them. In the absence of more limits, for the element limited by the statement "include a ...", there may be another same element in the process, the method, and the object or the device including the element.

The sequence numbers of the embodiments of the invention are just for describing, instead of representing superiority-inferiority of the embodiments.

Through the above description of implementation modes, those skilled in the art can clearly know that the method can be implemented by means of software plus a necessary common hardware platform, certainly by means of hardware; but in many cases, the former is the better implementation mode. Based on this understanding, the solutions of the invention substantially or the part making a contribution to a related technology can be embodied in the form of software product; the computer software product is stored in a storage medium (e.g. ROM/RAM, a magnetic disk, and a compact disc) and may include a number of instructions to make a terminal device (which can be a mobile phone, a computer, a server or a network device, etc.) perform the method in each embodiment of the invention.

The above is only the preferred embodiments of the invention, not limiting the scope of the invention; all equivalent structures or process transformations made through the contents of the specification and accompanying drawings of the invention or directly or indirectly applied to other related technical field are similarly included in the scope of patent protection of the invention.

### Industrial Applicability

The IKE negotiation control method, device and system in the application may be applied to an IKE negotiation control process when users use IPSec protocol to protect transmitted data to perform communication. According to the IKE negotiation control method, device and system, the virtual negotiation interface, matched with the initiating end, on the receiving end is searched and acquired based on triple information of a control message and initiating end identity information. By virtue of the solution, accurate matching of the virtual negotiation interface may be implemented, thereby avoiding negotiation failure caused by selecting a wrong virtual negotiation interface, and saving computing resources and storage space of two end devices performing IKE negotiation.

## Claims

1. An Internet Key Exchange, IKE, negotiation control method, comprising:
receiving, by a receiving end, an IKE negotiation message sent by an initiating end;
parsing the IKE negotiation message to obtain IKE negotiation message information;
in a case that a current IKE negotiation is in an aggressive mode, acquiring triple information of message and initiating end identity information according to the IKE negotiation message information; and
searching for and acquiring a virtual negotiation interface, matched with the initiating end, on the receiving end according to the triple information of message and the initiating end identity information.

2. The IKE negotiation control method as claimed in claim 1, wherein after obtaining the IKE negotiation message information, the IKE negotiation control method further comprises:
judging whether the current IKE negotiation is in the aggressive mode according to the IKE negotiation message information; and
in a case that the current IKE negotiation is not in the aggressive mode, performing negotiation according to the current IKE negotiation mode.

3. The IKE negotiation control method as claimed in claim 1, wherein acquiring the triple information of message and the initiating end identity information comprises:
acquiring, according to the IKE negotiation message information, a message source IP address, a message destination IP address, a message Virtual Private Network-ID, VPN-ID, of the IKE negotiation message and the initiating end identity information; and
combining the message source IP address, the message destination IP address and the message VPN-ID to obtain the triple information of message.

4. The IKE negotiation control method as claimed in claim 1, wherein searching for and acquiring the virtual negotiation interface, matched with the initiating end, on the receiving end comprises:
searching, according to the triple information of message, in a virtual negotiation interface table of the receiving end for one or more virtual negotiation interfaces matching the triple information of message;
in a case that one or more virtual negotiation interfaces matching the triple information of message are found in the virtual negotiation interface table, performing matching screening on the one or more found virtual negotiation interfaces according to the initiating end identity information; in a case that the matching screening is successfully performed, acquiring a virtual negotiation interface on which the matching screening is successfully performed as the virtual negotiation interface, matched with the initiating end, on the receiving end; in a case that no virtual negotiation interface matching the triple information of message is found in the virtual negotiation interface table, searching in the virtual negotiation interface table for one or more virtual negotiation interfaces matching the message destination IP address and the message VPN-ID according to the message destination IP address and the message VPN-ID in the triple information of message;
in a case that one or more virtual negotiation interfaces matching the message destination IP address and the message VPN-ID are found in the virtual negotiation interface table, performing matching screening on the one or more found virtual negotiation interfaces according to the initiating end identity information; in a case that the matching screening is successfully performed, acquiring a virtual negotiation interface on which the matching screening is successfully performed as the virtual negotiation interface, matched with the initiating end, on the receiving end.

5. The IKE negotiation control method as claimed in any one of claims 1 to 4, wherein after searching for and acquiring the virtual negotiation interface, matched with the initiating end, on the receiving end, the IKE negotiation control method further comprises:
in a case that the virtual negotiation interface, matched with the initiating end, on the receiving end is acquired successfully, acquiring configuration parameters of the virtual negotiation interface; according to the configuration parameters of the virtual negotiation interface, performing IKE negotiation with the initiating end, and generating an IKE Security Association, SA; and
in a case that the virtual negotiation interface, matched with the initiating end, on the receiving end is not acquired successfully, terminating the IKE negotiation.

6. An Internet Key Exchange, IKE, negotiation control device, comprising:
a receiving module, which is configured to receive an IKE negotiation message sent by an initiating end;
a parsing module, which is configured to parse the IKE negotiation message to obtain IKE negotiation message information;
an acquiring module, which is configured to, in a case that a current IKE negotiation is in an aggressive mode, acquire triple information of message and initiating end identity information according to the IKE negotiation message information; and
a searching module, which is configured to search for and acquire a virtual negotiation interface, matched with the initiating end, on the receiving end according to the triple information of message and the initiating end identity information.

7. The IKE negotiation control device as claimed in claim 6, further comprising:
a judging module, which is configured to judge whether the current IKE negotiation is in the aggressive mode according to the IKE negotiation message information; and
a negotiating module, which is configured to, in a case that the current IKE negotiation is not in the aggressive mode, perform negotiation according to the current IKE negotiation mode.

8. The IKE negotiation control device as claimed in claim 6, wherein the acquiring module is further configured to acquire, according to the IKE negotiation message information, a message source IP address, a message destination IP address, a message Virtual Private Network-ID, VPN-ID, of the IKE negotiation message and the initiating end identity information, and combine the message source IP address, the message destination IP address and the message VPN-ID to obtain the triple information of message.

9. The IKE negotiation control device as claimed in claim 6, wherein the searching module is further configured to:
search, according to the triple information of message, in a virtual negotiation interface table of the receiving end for one or more virtual negotiation interfaces matching the triple information of message;
in a case that one or more virtual negotiation interfaces matching the triple information of message are found in the virtual negotiation interface table, perform matching screening on the one or more found virtual negotiation interfaces according to the initiating end identity information; in a case that the matching screening is successfully performed, acquire a virtual negotiation interface on which the matching screening is successfully performed as the virtual negotiation interface, matched with the initiating end, on the receiving end; in a case that no virtual negotiation interface matching the triple information of message is found in the virtual negotiation interface table, search in the virtual negotiation interface table for one or more virtual negotiation interfaces matching the message destination IP address and the message VPN-ID according to the message destination IP address and the message VPN-ID in the triple information of message;
in a case that one or more virtual negotiation interfaces matching the message destination IP address and the message VPN-ID are found in the virtual negotiation interface table, perform matching screening on the one or more found virtual negotiation interfaces according to the initiating end identity information; in a case that the matching screening is successfully performed, acquire a virtual negotiation interface on which the matching screening is successfully performed as the virtual negotiation interface, matched with the initiating end, on the receiving end.

10. The IKE negotiation control device as claimed in claim 7, wherein the negotiating module is further configured to:
in a case that the searching module acquires the virtual negotiation interface, matched with the initiating end, on the receiving end successfully, acquire configuration parameters of the virtual negotiation interface; according to the configuration parameters of the virtual negotiation interface, the negotiating module is configured to perform IKE negotiation with the initiating end, and generate an IKE Security Association, SA;
the negotiating module is further configured to, in a case that the searching module fails to acquire the virtual negotiation interface, matched with the initiating end, on the receiving end successfully, terminate the IKE negotiation.

11. An Internet Key Exchange, IKE, negotiation control system, comprising a receiving end and an initiating end, wherein,
the receiving end comprises a device as claimed in any one of claims 6 to 10;
the initiating end is configured to send a negotiation message, perform IKE negotiation with the receiving end, and generate an IKE Security Association, SA.
